Europäisches Patentamt

**European Patent Office**

Office européen des brevets

(19)

(11) Publication number: **0 151 342**
A2

(12) # EUROPEAN PATENT APPLICATION

(21) Application number: **84308427.8**

(22) Date of filing: **04.12.84**

(51) Int. Cl.⁴: **B 01 D 23/10**
**B 01 D 23/24**

(30) Priority: **03.01.84 HU 884**

(43) Date of publication of application:
**14.08.85 Bulletin 85/33**

(84) Designated Contracting States:
**AT BE CH DE FR GB IT LI LU NL SE**

(71) Applicant: **SASAD Kertészeti Mezogazdasagi**
**Termeloszövetkezet**
**Hatarut, 14**
**H-2040 Budaörs(HU)**

(72) Inventor: **Torok, Gabor**
**Egri utca 40**
**H-1111 Budapest(HU)**

(72) Inventor: **Bosz, Otto**
**Szabadsag utca 41**
**H-2049 Diosd(HU)**

(72) Inventor: **Szabo, Ferenc**
**Fo utca, 10**
**H-1011 Budapest(HU)**

(74) Representative: **Gold, Tibor Zoltán et al,**
**T.Z.GOLD & COMPANY 9, Staple Inn High Holborn**
**London WC1V 7QH(GB)**

(54) **Process and apparatus for the purification of contaminated liquids by filtration.**

(57) Contaminated liquid is passed through a resilient, lumpy porous or cellular filtering medium (17) anti-gravitationally and under pressure; the porosity of the filtering medium (17) is controlled by the pressure of the contaminated liquid. In the course of regeneration of the filtering medium (17), simultaneously and continuously contaminated liquid and compressed air are passed upwardly through filtering medium (17), the air pressure being approximately equal to that of the contaminated liquid. In this way, contaminants accumulated in the filtering medium (17) are removed by means of the compressed air and the throughflowing contaminated liquid.

The apparatus includes a closed filter tank (13), perforated sheets (14, 15, 16) arranged perpendicularly to the direction of flow of the contaminated liquid in the closed filter tank (13) and containing therebetween a resilient, lumpy, porous or cellular filtering medium (17). At the bottom of the filter tank (13) there is an inlet (4a) for contaminated liquid and an inlet (7a) for compressed air. At the top of the filter tank (13) there is an outlet which is bifurcated to provide a discharge (6a) for filtered liquid and one (5a) for pre-filtrate which may be recycled to the inlet (4a).

./...

FIG. 1

-1-

**"PROCESS AND APPARATUS FOR THE PURIFICATION OF CONTAMINATED LIQUIDS BY FILTRATION."**

The invention relates to a process and an equipment for the purification of contaminated liquids by filtrating.

Traditional sand filter beds used for filtrating liquids are well known with which filtration is taking place from the top downwards, while re-washing is performed anti-gravitationally. Speed of filtration is relatively low.

The Hungarian patent HU-PS 179 030 described a method, in course of which - after having finished anti- -gravitational filtration - the liquid left in the filter-
-tank is pressed by compressed air allowed to stream from the
top downwards in a short time, whereby the resilient filtering medium is also pressed, thereafter filtered contaminations
are removed from the filtering medium.

The advantage of said process lies in that liquids
can be removed in a short time, while the drawback lies in
that the filter-tank is to be filled repeatedly with the
liquid to be filtered. Regeneration, filling, as well as
removal of pre-filtrate require about 10 % of filtering
period (of supplying clean water).

The essence of the French patent FR-PS 2 224 412
- relating to the so-called HYDROKAUTICS equipment - lies
in that in the filter-tank the filtering medium is surrounded
by a stationary perforated sheet and one to be moved by means
of a piston. If the filtering medium becomes blocked up, the
two perforated sheets are approached to each other by the
aid of the piston, whereby the filtered contaminated materials
are pressed out from the resilient filtering medium. The
drawback of this process lies in that regeneration, filling
and removal of pre-filtrate are most timeconsuming.

The essence of the solution according to the
US-PS 3 424 674 lies in that the liquid to be filtered is
allowed to stream anti-gravitationally through the filterin
medium in a filter tank which is filled with beads made of
a synthetic material, (preferably polyethylene) with a
specific weight being considerably less, than that of the
liquid to be filtered, whereas the filtered liquid and the contaminated filtering medium are separated and the liquid is discharged on the top of the filter-tank.

While streaming, the filtering medium thus separated is continuously cleaned by agitating and scrubbing, whereafter it is led back continuously into the filter-tank.

The advantage of the process lies in that filtering medium is continuously cleaned, while the disadvantageous feature is that the process can be realized in an open tank only, in a closed pressurized system it cannot be used. In this case, however, speed of filtrating is very low.

The aim of the invention is to develop a process and an equipment for filtering contaminated liquids, with which time needed for regeneration is minimal, at the same time filtering and regeneration are unidirectional.

The invention is based on the recognition that the transit speed of the air bubbles is considerably higher, than the transit speed of liquids. In such a manner efficient and quick regeneration can be achieved, unidirectionally with filtration. Compressed air is introduced in the same direction as the liquid.

In accordance with the aim set the process according to the invention for the purification of contaminated liquids by filtering is performed so, that the contaminated liquid is led through the resilient lumpy porous filtering medium from the bottom upwards under pressure, while by the pressure of the contaminated liquid porosity of the filtering medium is controlled; for the sake of regeneration beside continuously supplying the contaminated liquid the filtering medium is pressed by compressed air the pressure
of which is nearly equal to the pressure of the
contaminated liquid and which is allowed to pass from the
bottm upwards and by means of the compressed air as well
as the flowing contaminated liquid vontaminations having
been accumulated in the filtering medium are washed therefrom.

In accordance with the aim set the equipment
according to the invention for the purification of contami-
nated liquids by filtering is formed so, that it contains
a closed filtertank, two or more perforated sheets which
are arranged perpendicularly to the flow direction of the
contaminated liquid in said closed filter-tank, furtheron
between said perforated sheets there is the resilient porous
filtering medium; on the bottom of the filter-tank there is
an inlet stud for introducing the contaminated liquid; the
equipment also contains an inlet stud for the compressed
air and a stud on the upper part of the filter-tank for the
discharge of the filtered liquid and the pre-filtrate,
respectively.

A further characteristic of the invention lies in
that grain size of the filtering medium lies in the range
between 25 to 50 mm, preferably 25 to 30 mm, porosity
equals to 40 to 50 pores /cm, bulk density to 30 to 35 $kg/m^3$,
it is made of a synthetic material, preferably of polyurethane
foam.

With a further preferred embodiment the filter-
tank is of cylindrical shape, the filter-tank is connected to a manometer and via a pipeline for the compressed air
it is connected to an air compressor. On the part of the
pipeline lying at the filter-tank nozzles distributing
the compressed air are to be found. The pipeline delivering
compressed air is provided with a closing organ e.g. a magnetic
valve, closing the stream of compressed air, as well as with
a pressure-regulating closing organ, e.g. a ball pivot.
From the stud discharging the filtered liquid and the pre-
filtrate two pipelines are forked, one for the pre-filtrate
and one for the filtered water. The pipeline for
the pre-filtrate is provided with a closing organ, closing
the flow of the pre-filtrate, while the other one has a
closing organ for closing the flow of the filtered liquid.
The pipeline delivering the pre-filtrate is connected to a
liquid storage tank, which again is connected with the filter-
tank via the the pipeline delivering the contaminated liquid,
said pipeline is provided with a closing organ, e. g. a
magnetic valve which is closing the flow of the contaminated
liquid. From the pipeline for the contaminated liquid an output
controlling line is branchedoff to the liquid storage tank.
In the line there is a closing organ regulating the output,
as e.g. a ball pivot and an organ for regulating the output,
e.g. a magnetic valve; at the end of the pipeline for the
contaminated liquid, in the liquid storage tank there is
a feeding pump arranged.

The solution according to the invention has several
advantages.

0151342

It is considered as a considerable advantage, in so far as time for regeneration and gaining the pre-filtrate are short. Regeneration does not require clean water, the filter-tank has not be to be discharged for regeneration and filled thereafter, in addition, a most efficient regeneration can be achieved.

Due to the shorter regeneration and pre-filtrate gaining period, invenstment costs are lower, as effective output in considerably higher.

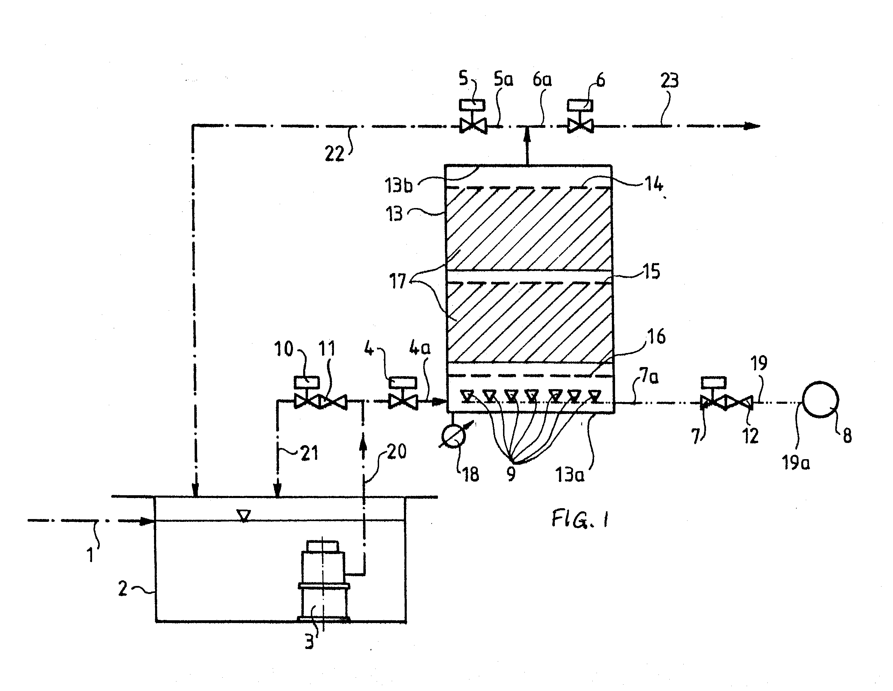

There is no discharge and charge, accordingly useful capacity can be further increased. The equipment is simple. The invention will be described by means of a preferred embodiment serving as an example, by the aid of the drawing enclosed, showing the schematical arrangement of the equipment.

The contaminated liquid 1 arrives into the liquid storage tank 2, wherefrom it is delivered through the pipeline 20, the inlet stud 4a and the closing organ 4 closing the flow of the contaminated liquid to the bottom of the filter-tank 13. Optionally a flocculating agent can be admixed to the contaminated liquid 1 in the liquid storage tank 2. The line 21 - regulating the output - is branched-off from the pipeline 20 delivering the contaminated liquid; the pipeline 21 is leading back a part of the contaminated liquid - optionally mixed with a flocculating agent - through the output regulating closing organ 10, e.g. a ball pivot and the output controlling organ, e.g. a magnetic valve to the liquid storage tank 2.

In the closed filter-tank 13 three perforated sheets are arranged perpendicularly to the direction of stream, namely the lower perforated sheet 16, the central perforated sheet 15 and the upper perforated sheet 14.

Between the perforated sheets 14, 15, 16 there is a lumpy resilient porous filtering medium 17. A part of the filtering medium is pressed to the upper perforated sheet 14, while the other part is pressed to the central perforated sheet 15, when filtration in anti-gravitational direction is taking place.

On the upper part 13a of the filter-tank 13 the discharge studs 5a, 6a are to be found. The discharge studs 5a, 6a are forked, one branch is for the pre-filtrate, this is the pipeline 22, on which there is a pre-filtrate closing organ 5, e.g. a magnetic valve, the other branch, the pipeline 23 for the filtered liquid contains the closing organ 6 for the filtered liquid. The pipeline 22 delivers the pre-filtrate into the liquid storage tank 2, while the pipeline 23 delivers the filtered liquid either to the storage tank or to the place of application.

In case of regeneration compressed air is led from the air-compressor 8 through the compressed air delivering pipeline 19, the pressure regulating closing organ 12, e.g. a ball pivot, the closing organ 7 - closing the flow of compressed air -, e.g. a magnetic valve, to the filter-tank 13. On the bottom of the filter-tank 13 compressed air is evenly distributed by the nozzles 9. The antigravitationally streaming compressed air is passing through the pores of the filtering medium 17 in course of regeneration and forces out the contaminations.

0151342

Prior to filtrating the closing organ 4 closing the stream of contaminated liquid is open, so the pre-filtrate closing organ 5. The organ 6 closing the path of the filtered liquid, as well as the organ 7 closing the stream of compressed air are closed. Thereafter the closing organ 5 is closed and     the closing organ 6 for the filtered liquid is opened. Now filtering is taking place.

In course of regeneration the organ 6 closing the flow of the filtered liquid is closed, the closing organ 5 for the pre-filtrate and the compressed air closing organ 7 are open. On the filter-tank 13 there is manometer for pressure control.

The process and equipment according to the invention serve in particular for sewage pufirication, but other liquids can be cleaned too. Filtered water can be used as drink water, industrial water or filtered sewage etc.

0151342

- 1 -

## CLAIMS

1.    A process for the purification of liquids by filtration, comprising passing contaminated liquid through a filtering medium against gravity and under pressure, said medium being confined between supporting structural elements, and regenerating said medium, characterised in that said medium (17) consists of a resilient porous or cellular material, the porosity of which is controlled by the pressure of the contaminated liquid further characterised by regenerating said medium by continuously supplying thereto contaminated liquid and simultaneously also pressurised air or gas, preferably at a pressure approximately equal to that of the contaminated liquid, so as to express contaminants from said medium and to remove them by means of the stream of pressurised air or gas and the contaminated liquid.

2.    Apparatus for the purification of liquids by filtering, comprising a closed filter tank (13), fluid-permeable structural elements (14, 15, 16) arranged in the closed filter tank (13); a filtering medium (17) held between the said elements (14, 15, 16), an inlet (4a) for the tank (13) for introducing contaminated liquid (1) so as to flow upwardly, pressurising means for compressing said filter medium (17) during regeneration, and an outlet (5a, 6a) for discharging filtered liquid, characterised in that the said medium is a resilient, cellular or porous filtering medium (17) ; and further characterised in that the said pressurising medium is pressurised gas or air, the tank (13) being provided with an inlet (7a), connectible to a source, for introducing pressurised gas or air to flow upwardly.

3.    Apparatus as claimed in claim 2, characterised in that the particle size of said filtering medium (17) lies in the range between 25 and 50 mm, preferably 25 to 30 mm, its porosity is 40-50 pores or cells per cm, and its bulk density is 30 to 35 kg/m$^3$.

4.     Apparatus according to claim 2 or 3, characterised in that said filtering medium (17) is made of a synthetic material, preferably of polyurethane foam.

5.     Apparatus as claimed in any of claims 2 to 4, characterised in that the filter tank (13) has a cylindrical shape, that it is connected to a pressure-measuring instrument, e.g. a manometer (18); and that it is interconnected with an air/gas compressor (8) via a pipeline (19) coupled to said air/gas inlet (7a), the pipeline (19) being provided with a shut-off valve (7), e.g. an electromagnetic or magnetic valve, and with a pressure-regulating closure member (12), e.g. a ball cock.

6.     Apparatus as claimed in any of the claims 2 to 5, characterised in that nozzles (9) are arranged in the filter tank (13) for distributing compressed air or gas across the width of the said tank (13).

7.     Apparatus as claimed in any of the claims 2 to 6, characterised in that said discharge outlet (5a, 5b) is bifurcated to provide respective ducts (22, 23) for pre-filtrate (1b) and filtered liquid (1a) respectively, each said branch or duct (22,23) being provided with its own flow-controlling member (5, 6); and characterised in that the pre-filtrate duct (22) is connected to a liquid storage tank (2) which is connected to the filter tank (13) through a pipeline (20) delivering contaminated liquid, said pipeline (20) for the contaminated liquid being also provided with a closing member (4), e.g. a magnetic valve for closing the flow of the contaminated liquid.

0151342

8.    Apparatus as claimed in claim 7, characterised in that from the pipe line (20) of the contaminated liquid a throughput-regulating pipe line (21) is branched off to the liquid storage tank (2).

9.    Apparatus as claimed in claim 8, characterised in that the throughput regulating pipe line (21) is provided with a throughput-regulating closing member (10), e.g. a ball cock, and a throughput regulating organ (11), e.g. a magnetic valve.

10.    Apparatus as claimed in claim 9, characterised in that at the end of the pipe line (20) delivering the contaminated liquid is a delivery pump (3) which is arranged in the liquid storage tank (2).

11.    The use of a resiliently deformable, cellular or porous medium as a filtering medium, preferably in a process according to claim 1 or in apparatus according to any of claims 2 to 10.

FIG. 1